(19) **Europäisches Patentamt / European Patent Office / Office européen des brevets**

(11)  **EP 2 051 611 B1**

(12)  **FASCICULE DE BREVET EUROPEEN**

(45) Date de publication et mention de la délivrance du brevet:
**15.11.2017 Bulletin 2017/46**

(21) Numéro de dépôt: **07823434.1**

(22) Date de dépôt: **20.08.2007**

(51) Int Cl.:
*A47J 31/00* *(2006.01)*     *A47J 31/20* *(2006.01)*

(86) Numéro de dépôt international:
**PCT/FR2007/001385**

(87) Numéro de publication internationale:
**WO 2008/020135 (21.02.2008 Gazette 2008/08)**

(54) **DISPOSITIF POUR LA PRÉPARATION D'UNE BOISSON CHAUDE OU FROIDE PAR INFUSION D'UN PRODUIT DANS DE L'EAU**

VORRICHTUNG FÜR DIE ZUBEREITUNG EINES HEISSEN ODER KALTEN GETRÄNKS DURCH INFUSION EINES PRODUKTS IN WASSER

DEVICE FOR PREPARING A HOT OR COLD DRINK BY BREWING A PRODUCT IN WATER

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **18.08.2006 FR 0607390**
**18.08.2006 FR 0607391**

(43) Date de publication de la demande:
**29.04.2009 Bulletin 2009/18**

(73) Titulaires:
• **Stamm, Francis**
**67000 Strasbourg (FR)**
• **Mo, Cui Wei**
**67000 Strasbourg (FR)**

(72) Inventeur: **ENGEL, Thierry**
**67100 Strasbourg (FR)**

(74) Mandataire: **Gevers SA**
**Rue des Noyers 11**
**2000 Neuchâtel (CH)**

(56) Documents cités:

| | |
|---|---|
| WO-A-2006/055673 | CH-A5- 650 140 |
| DE-U1-202006 001 296 | GB-A- 870 763 |
| JP-A- 2002 065 467 | JP-A- 2005 131 308 |
| US-A- 2 517 073 | US-A- 2 971 454 |
| US-A- 2 996 975 | US-A- 3 941 042 |
| US-A1- 6 095 031 | US-A1- 2003 126 993 |
| US-A1- 2004 200 357 | US-A1- 2005 051 033 |
| US-A1- 2005 284 304 | |

Printed by Jouve, 75001 PARIS (FR)

**Description**

La présente invention concerne un dispositif pour la préparation d'une boisson chaude ou froide, par infusion d'un produit dans de l'eau. L'invention trouvera de nombreuses applications et plus particulièrement dans le domaine de l'obtention du thé.

Il est bien connu de préparer du thé en chauffant un volume d'eau puis en faisant tremper dans ladite eau chaude des feuilles de thé. Les feuilles de thé sont, après infusion, retirées en versant l'eau et les feuilles de thé à travers un filtre, ce dernier retenant lesdites feuilles.

Il est également connu de préparer le thé en chauffant de l'eau, puis en versant l'eau chaude dans une tasse ou similaire, puis en immergeant dans ladite eau chaude un sachet diffuseur contenant des feuilles de thé. Les feuilles de thé libèrent alors leurs arômes, la théine, etc... jusqu'à ce que leur concentration soit à la convenance du consommateur, ce dernier retirant alors le sachet de l'eau pour consommer la boisson ainsi obtenue.

Ces procédés pour obtenir du thé sont empiriques de sorte qu'il est difficile pour le consommateur d'obtenir de manière répétée une boisson présentant des caractéristiques organoleptiques constantes. De plus, les caractéristiques organoleptiques du thé ainsi obtenu sont trop éloignées de celles d'un thé préparé conformément à la tradition chinoise quasi millénaire et cela, quelque soit la qualité des feuilles utilisées.

Par ailleurs, on a déjà imaginé d'automatiser le procédé de préparation du thé.

C'est le cas, par exemple, du brevet GB 870,763 et des brevets américains US 2,517,073; US 2,971,454; US 2,996,975; US 3,941,042 et US 6,915,733. Ce dernier décrit un procédé de préparation d'une boisson infusée et un dispositif pour mettre en oeuvre ledit procédé.

Ce procédé consiste à mesurer la quantité d'eau contenue dans un réservoir, puis à chauffer l'eau contenue dans le réservoir, puis le produit est infusé dans l'eau chaude pendant une durée qui est calculée en fonction de la quantité d'eau mesurée et/ou de la température de l'eau et/ou de la nature de la boisson à préparer.

Bien que ce type de procédé permette d'obtenir du thé dont les caractéristiques organoleptiques sont constantes d'une infusion à une autre, ces caractéristiques organoleptiques sont trop éloignées de celles d'un thé préparé conformément à la tradition chinoise de sorte que le thé obtenu suivant ce procédé ne satisfait pas les connaisseurs de cette boisson.

L'un des buts de l'invention est donc d'améliorer les procédés de préparation du thé de l'art antérieur en proposant un dispositif permettant d'obtenir de manière répétée une boisson chaude ou froide, telle que du thé par exemple, dont les qualités organoleptiques sont similaires à celles d'un thé préparé conformément à la tradition chinoise. En outre, il est décrit un procédé d'obtention d'une boisson chaude ou froide, par infusion d'un produit dans de l'eau, tel que des feuilles de thé par exemple, comportant une étape de chauffage de l'eau à une température déterminée, puis une étape de mélange des feuilles avec l'eau chaude, et finalement une étape de retrait des feuilles infusées, comportant au moins les étapes suivantes de :

- détermination de la température à laquelle un volume d'eau prédéterminé doit être chauffé,
- détermination du temps d'infusion des feuilles dans ledit volume d'eau chauffé,

ledit procédé est remarquable en ce que ledit temps d'infusion dans ledit volume d'eau est déterminé en fonction des caractéristiques des infusions précédemment réalisées avec lesdites feuilles, les informations relatives auxdites feuilles étant enregistrées dans une unité de mémoire.

Le volume d'eau prédéterminé, chauffé à une température déterminée, est versé, suivant un haut débit, sur les feuilles à infuser placées dans un bac dit d'infusion.

De manière avantageuse, préalablement à l'étape d'infusion, ledit procédé comporte au moins une étape de lavage des feuilles à infuser.

Cette étape de lavage consiste à mélanger les feuilles à infuser avec un volume d'eau déterminé porté à une température supérieure à 60°C pendant un temps inférieur à 5 secondes.

De préférence, l'étape de lavage consiste à mélanger les feuilles à infuser avec un volume d'eau déterminé porté à une température comprise entre 60° et 100°C pendant un temps inférieur ou égal à 2 secondes.

Par ailleurs, une information relative à la nature des feuilles à infuser est préalablement enregistrée dans ladite unité de mémoire.

De plus, une information relative aux caractéristiques des infusions réalisées avec lesdites feuilles est préalablement enregistrée dans ladite unité de mémoire

De plus, la température à laquelle le volume d'eau prédéterminé doit être chauffé est déterminée par la nature des feuilles à infuser. L'objet de l'invention concerne un dispositif tel que défini dans les revendications pour la préparation d'une boisson chaude ou froide, par infusion d'un produit dans de l'eau, comportant une alimentation en eau, des moyens de chauffage pour chauffer l'eau et une unité de pilotage coopérant avec des moyens de détermination de la température à laquelle ledit volume d'eau doit être chauffé et des moyens de détermination du temps d'infusion du produit dans ledit volume d'eau chauffé, remarquable en ce qu'il comporte au moins un infuseur apte à recevoir un volume d'eau déterminé et à être entraîné en mouvement, ledit infuseur comprenant au moins des moyens de retenue du produit à infuser et des moyens d'évacuation de l'infusion.

De manière avantageuse, les moyens de retenue s'étendent dans un premier volume V1 dit volume de retenue et d'infusion, les moyens de chauffage de l'eau s'étendent dans le second volume V2 dit volume de chauffage, le mouvement de l'infuseur permettant de transférer le volume d'eau déterminé au moins du volume V2 vers le volume V1 puis vers les moyens d'évacuation.

De préférence, les moyens d'évacuation débouchent entre les volumes V1 et V2 et consistent en un trou pratiqué dans la paroi de l'infuseur et débouchant entre les volumes V1 et V2.

Par ailleurs, es moyens de retenue consistent en un panier filtre apte à être introduit dans le volume V1 par un orifice pratiqué dans la paroi de l'infuseur, ledit panier filtre de retenue étant obtenu dans un matériau poreux, de préférence dans de la terre cuite.

Selon une caractéristique avantageuse, l'infuseur est monté en rotation autour d'un axe. Cet axe forme un angle α avec l'horizontal de préférence compris entre 20 et 45°.

Par ailleurs, le dispositif comporte un moteur pour entraîner en rotation l'infuseur autour de l'axe qui est de préférence exclu du volume V2 avitant tout problème d'étanchéité.

L'infuseur présente une forme globalement sphérique.

De plus, le dispositif est constitué d'une embase en forme générale de croissant de lune dont une première branche comporte un réservoir d'eau et dont la seconde branche comporte à son extrémité libre le moteur apte à entraîner en rotation l'infuseur autour de l'axe.

Accessoirement, la première branche est amovible et comporte dans sa base une pompe connectée à une conduite d'évacuation débouchant à l'extrémité libre du réservoir, et un capteur capacitif, ladite pompe et le capteur capacitif étant reliés à l'unité de pilotage.

D'autres avantages et caractéristiques ressortiront mieux de la description qui va suivre de plusieurs variantes d'exécution données à titre d'exemples non limitatifs, du procédé pour la préparation d'une boisson chaude infusée et du dispositif mettant en oeuvre ledit procédé conforme à l'invention, en référence aux dessins annexés sur lesquels :

- la figure 1 est une représentation schématique du dispositif pour la préparation d'une boisson infusée conforme à l'invention,
- la figure 2 est une représentation schématique d'une variante d'exécution du dispositif pour la préparation d'une boisson infusée suivant l'invention,
- la figure 3 est une vue en perspective éclatée d'une variante d'exécution du dispositif pour la préparation d'une boisson infusée suivant l'invention,
- la figure 4 est une vue en perspective de la partie arrière de la variante d'exécution représentée sur la figure 3,
- la figure 5 est une représentation schématique de l'interface utilisateur de l'unité de pilotage de la variante d'exécution du dispositif représenté sur la figure 3,
- la figure 6 est un tableau indiquant la masse des différents types de thé pour un volume d'eau déterminé, les températures de lavage et d'infusion ainsi que les temps de lavage et d'infusion,
- les figures 7A à 7D sont des représentations schématiques du dispositif représenté sur la figure 3 au cours des différentes étapes du procédé d'obtention d'une boisson infusée suivant l'invention,
- la figure 8 est une vue en perspective d'un élément en matériau poreux immergé dans le bac d'infusion du dispositif suivant l'invention représenté sur la figure 1.

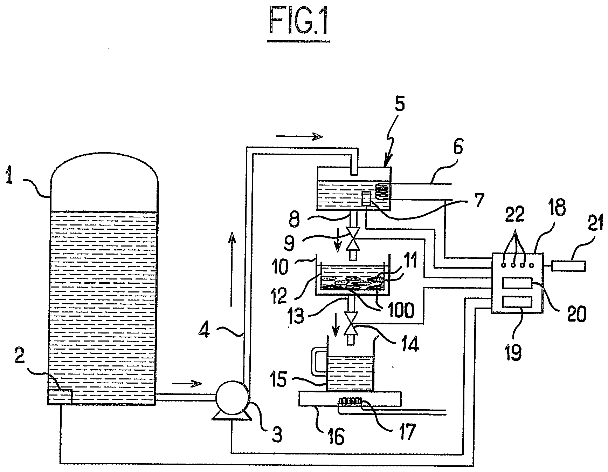

En référence à la figure 1, le dispositif suivant l'invention comporte un réservoir d'eau 1 de grande capacité comprenant dans sa partie inférieure un capteur de pression 2 qui permet de mesurer en temps réel la quantité d'eau présente dans ledit réservoir 1.

$$V = h.A \quad (1)$$

et

$$P = \rho.g.h \quad (2)$$

Où

P représente la pression mesurée
$\rho$ représente la densité de l'eau
g représente la constante de gravité terrestre, et
h représente la hauteur de l'eau dans le réservoir 1.

En introduisant l'équation (1) dans l'équation (2) ci-dessus, on obtient l'équation suivante :

$$V = \frac{P.A}{\rho.g} \quad (3)$$

Cette équation (3) permet de déterminer en temps réel le volume d'eau présent dans le réservoir 1.

Les équations précédentes correspondent à un réservoir 1 cylindrique de section constante. Il est bien évident que le réservoir 1 pourra présenter une section variable et que l'Homme du Métier adaptera alors ces équations.

Selon une variante d'exécution du dispositif conforme à l'invention, ce dernier comporte un réservoir d'eau 1 présentant un volume déterminé, tel que le volume d'eau pour la préparation d'une ou deux tasses de thé par exemple, et comportant éventuellement une graduation. Dans cette variante d'exécution, le dispositif ne comporte pas de capteur de pression 2 pour déterminer la quantité d'eau présente dans le réservoir d'eau 1.

Par ailleurs, le dispositif comporte une pompe 3 raccordée à une conduite 4 dont les extrémités débouchent respectivement à l'extrémité inférieure du réservoir 1 et à l'extrémité supérieure d'un premier bac dit de chauffe 5 afin de transférer un volume déterminé d'eau depuis le réservoir 1 vers ledit bac de chauffe 5 comme il sera détaillé plus loin.

Il est bien évident que le dispositif peut comporter plusieurs conduites 4 de section constante ou variable sans pour autant sortir du cadre de l'invention.

Ledit bac de chauffe 5 comprend une résistance électrique 6 pour chauffer l'eau et une sonde de température 7, tel qu'un thermocouple par exemple, pour mesurer en temps réel la température de l'eau contenue dans ledit bac de chauffe 5. Ce dernier comprend dans sa partie inférieure une ouverture de vidange 8 raccordée à des moyens d'ouverture et de fermeture étanche 9, telle qu'une soupape électrique raccordée de manière étanche avec ladite ouverture 8, afin de permettre l'évacuation rapide de l'eau chauffée dans ledit bac de chauffe 5 vers un second bac dit d'infusion 10 dans lequel sont préalablement placées des feuilles de thé 11.

On observera que la soupape électrique 9 permet de verser l'eau chaude dans le bac d'infusion 10 avec un débit important de telle manière que l'eau soit versé en un temps très court, de l'ordre de une à plusieurs secondes ou inférieur. Ce versement rapide à haut débit procure d'une part un brassage des feuilles de thé dans l'eau favorisant une infusion homogène et rapide du thé et d'autre part de contrôler avec précision le temps d'infusion, le versement de l'eau n'étant pas progressif. On entend par haut débit un débit de l'ordre de 150ml en un temps inférieur ou égal à 2 secondes.

Toutefois, il va de soit que l'eau pourrait être verser plus lentement dans le bac d'infusion 10, ce qui nécessiterait des temps d'infusion différents, sans pour autant sortir du cadre de l'invention.

Ce bac d'infusion 10 est positionné sous le bac de chauffe 5, au droit de ce dernier, et comprend des moyens de filtrage 12, tel qu'un panier filtre de retenue des feuilles de thé servant à l'infusion.

Ledit bac d'infusion 10 est obtenu dans un matériau non poreux, tel que dans une matière plastique ou de l'inox par exemple, et des segments 100 d'un matériau poreux, de préférence de terre cuite, sont positionnés dans ledit bac d'infusion 10 de telle manière que lesdits segments 100 de matériau poreux soient immergés lorsque l'eau chaude est versée dans le bac d'infusion 10. Ces segments 100 de matériau poreux consistent par exemple, en référence à la figure 8, en des monolithes globalement parallélépipédiques comportant avantageusement des gorges 101 afin d'augmenter la surface d'échange entre lesdits segments 100 et l'infusion.

Par ailleurs, chaque segment 100 comporte avantageusement des moyens de retenu, non représenté sur les figures, afin de maintenir immergé le ou lesdits éléments 100 dans le bac d'infusion 10 et/ou dans le bac de service 15.

Ces moyens de retenue peuvent consister dans tout moyen de retenue bien connu de l'Homme de l'art tel qu'une tige solidaire dudit segment 100 et formant à son extrémité libre un crochet.

Il va de soi que les segments 100 peuvent présenter une forme quelconque sans pour autant sortir du cadre de l'invention.

Ledit matériau poreux retient notamment le tanin qui se diffuse dans l'eau lors de l'infusion et un dépôt de tanin se forme au fur et à mesure des infusions successives. Ce dépôt de tanin améliore de manière significative les qualités organoleptiques du thé infusé. De plus, lors de l'immersion des segments 100 de terre cuite dans l'infusion des particules de terre cuite se dissolvent dans ladite infusion procurant à ladite infusion des qualités organoleptiques proches de celles du thé obtenu selon la méthode traditionnelle des maîtres thé.

Il est bien évident que le versement à haut débit de l'eau dans le bac d'infusion 10 peut être substitué par tous moyens, mécaniques ou hydrauliques, aptes à permettre un brassage des feuilles de thé dans l'eau chaude lors du versement de cette dernière dans le bac d'infusion. Ces moyens peuvent consister, par exemple, en des moyens d'agitation de l'eau et/ou des moyens d'agitation du panier filtre 12.

Ledit bac d'infusion 10 comporte dans sa partie inférieure une seconde ouverture dite de vidange 13 raccordée à des seconds moyens d'ouverture et de fermeture étanche 14, telle qu'une soupape électrique par exemple, afin de permettre l'évacuation de l'infusion dans un bac dit de service 15 positionné sous le bac d'infusion 10 au droit de ce dernier. Ce bac de service 15 repose sur un socle 16 comportant des moyens de chauffage 17, tels qu'une résistance électrique pour maintenir le thé infusé à la température appropriée.

Il va de soi que les moyens de chauffage peuvent être substitués par des moyens de refroidissement tel qu'un dispositif à effet Pelletier, par exemple, ou tout autre moyen équivalent bien connu de l'Homme de l'art.

Le dispositif suivant l'invention comporte, par ailleurs, une unité de pilotage 18 connectée au capteur de pression 2 et à la sonde de température 7. Cette unité de pilotage 18 comprend d'une part une unité de mémoire 19 dans laquelle sont enregistrées des informations relatives aux feuilles de thé placées dans le bac d'infusion 10 et d'autre part un système micro-programmé tel qu'un microprocesseur 20, ou un micro-contrôleur, connecté à l'unité de mémoire, et dans lequel sont enregistrés des algorithmes constituant des moyens de détermination de la température à laquelle le volume d'eau doit être chauffé et des moyens de détermination du temps d'infusion du produit dans ledit volume d'eau chauffé.

Le dispositif comporte avantageusement un écran d'affichage 21 et des boutons 22 pour sélectionner des informations relatives notamment aux feuilles de thé dans l'unité de mémoire 19. Lesdits boutons 22 permettront notamment de sélectionner la nature du thé, le nombre d'infusions ainsi que le nombre de tasses. Ladite unité de pilotage 18 est, par ailleurs, connectée à la pompe 3, aux moyens de chauffage 6 du bac dit de chauffe 5, au capteur de température 7, au capteur de pression 2, aux moyens d'ouverture et de fermeture 9 et 14 et aux moyens de chauffage 17 du socle 16 afin de les piloter.

On expliquera maintenant le fonctionnement du dispositif suivant l'invention en référence à la figure 1.

Une quantité déterminée de feuilles de thé 11 est placée dans le panier filtre de retenue 12 du bac d'infusion 10. L'unité de pilotage 18, au moyen du microprocesseur 20 et de l'unité de mémoire 19, détermine la quantité d'eau contenue dans le réservoir 1 qui doit être transférer dans le bac de chauffe 5. Cette quantité d'eau dépend de la nature des feuilles de thé et de leur quantité. Par exemple, le volume d'eau transféré dans le bac de chauffe est de 150 ml pour 6g de thé bleu-vert et/ou de thé noir et de 150 ml pour 3g de thé vert.

Il est bien évident que la quantité d'eau pourra dépendre du nombre de tasses souhaitées et que la quantité de thé devant être placée dans le panier filtre de retenue 12 du bac d'infusion 10 pourra être calculer de manière similaire.

La quantité d'eau nécessaire étant déterminée, l'unité de pilotage 18 actionne la pompe 3 jusqu'à ce que le capteur de pression indique la pression $P_2$ suivante :

$$P_2 = P_1 - \frac{(V_1 - V_2)}{A} \rho.g$$

Où

P$_1$ est la pression mesurée à l'intérieur du réservoir 1 avant le pompage,
P$_2$ est la pression mesurée à l'intérieur du réservoir 1 à la fin du pompage,
V$_1$ est le volume d'eau contenu dans le réservoir 1 avant le pompage,
V$_2$ est le volume d'eau contenu dans le réservoir 1 à la fin du pompage

La pompe 3 est alors arrêtée.

L'unité de pilotage 18 actionne la résistance électrique 6 du bac de chauffe 5 jusqu'à ce que l'eau contenue dans ledit bac de chauffe 5 atteint une température déterminée, ladite température étant mesurée par la sonde de température 7. Ladite température est préalablement déterminée par les moyens de détermination de la température de l'unité de pilotage 18. Cette température dépend de la nature des feuilles de thé placées dans le bac d'infusion. Par exemple, la température est de 95°C pour du thé bleu-vert, de 80°C pour du thé vert de 95°C pour du thé noir.

Lorsque l'eau contenue dans le bac de chauffe 5 atteint ladite température déterminée, l'unité de pilotage 18 actionne la soupape électrique 9 afin de verser l'eau chaude, en un temps très court, dans le bac d'infusion 10.

Après infusion des feuilles de thé dans l'eau chaude pendant un temps dit d'infusion déterminé, ledit temps d'infusion étant déterminé par l'unité de pilotage 18, cette dernière actionne la seconde soupape électrique 14 pour verser le thé dans le bac dit de service 15, les feuilles de thé 11 restant dans le panier filtre de retenue 12. Le temps d'infusion est déterminé par l'unité de pilotage, et plus particulièrement par les moyens de détermination du temps d'infusion, et il dépend d'une part de la nature des feuilles de thé et d'autre part du nombre d'infusions déjà réalisées avec lesdites feuilles de thé. Par exemple, pour du thé bleu-vert, si le temps d'infusion est d'environ 5 secondes pour la première infusion, il sera d'environ 10 secondes pour la seconde infusion, puis d'environ 20 secondes pour la troisième infusion, etc... et, pour du thé vert, si le temps d'infusion est d'environ 30 secondes pour la première infusion, il sera d'environ 40 secondes pour la seconde infusion, puis de 60 secondes pour la troisième infusion, etc... L'utilisateur pourra bien évidemment adapter ces temps d'infusion en fonction notamment de ses goûts.

Lorsque le thé est versé dans le bac de service 15, l'unité de pilotage actionne la résistance électrique 17 du socle 16 pour maintenir le thé à la bonne température propice à la dégustation du thé ainsi obtenu.

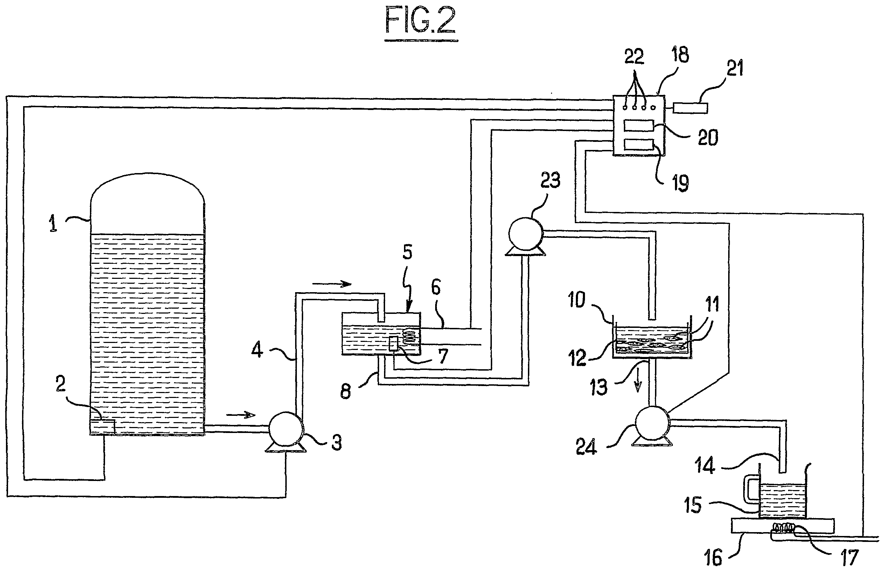

Selon une variante d'exécution du dispositif conforme à l'invention, en référence à la figure 2, ledit dispositif comporte l'ensemble des éléments du dispositif décrit précédemment à l'exception des soupapes électriques 9 et 14 qui sont substituées par une pompe 23 et respectivement 24. Ainsi, contrairement au dispositif précédemment décrit où l'eau est versée du bac de chauffe 5 vers le bac d'infusion 10 puis vers le bac de service 15 par gravité impliquant que le bac d'infusion 12 soit situé au dessus du bac de service 15 et que le bac de chauffe 5 soit situé au dessus du bac d'infusion 12, l'utilisation de pompes 23 et 24 pour verser l'eau du bac de chauffe 5 vers le bac d'infusion 12 puis vers le bac de service 15 permet d'avoir une position des différents bacs 5, 12 et 15 quelconque les uns par rapport aux autres. De la sorte, le bac de chauffe est avantageusement positionné à côté du bac d'infusion facilitant ainsi l'accès audit bac d'infusion 12 par le haut notamment.

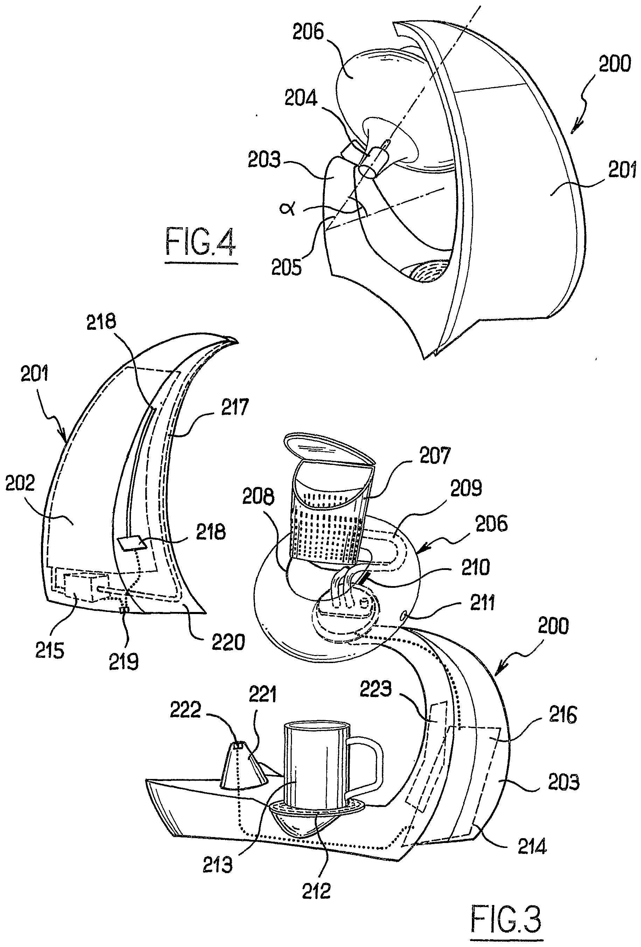

Selon une variante d'exécution préférée du dispositif suivant l'invention, en référence à la figure 3, ce dernier est constitué d'une embase 200 en forme générale de croissant de lune dont une première branche 201 comporte le réservoir d'eau 202 et dont la seconde branche 203 comporte, en référence à la figure 4, un moteur 204 apte à entraîner en rotation autour d'un axe 205 un élément 206 de forme générale globalement sphérique dit infuseur, ledit axe 205 s'étendant à l'extrémité de la seconde branche 203 suivant un angle α compris entre 1 et 179° avec l'horizontal, et de préférence un angle α compris entre 20 et 45°.

Il va de soi que ledit élément 206 pourra présenter une forme de révolution (cônique, ovoïde, etc...) ou toute autre forme telle qu'un parallélépipède ou un tétraèdre, etc... sans pour autant sortir du cadre de l'invention.

Par ailleurs, le moteur 204 pourra entraîner en rotation l'infuseur 206 autour de l'axe 205 par tout moyen bien connu de l'homme du métier tel qu'une vis sans fin et une roue dentée par exemple.

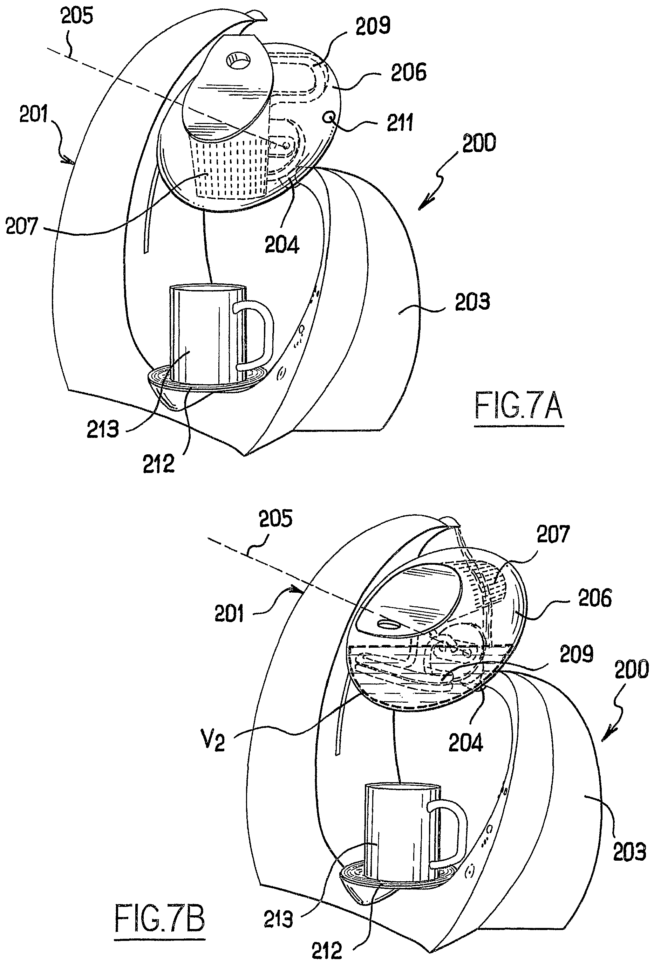

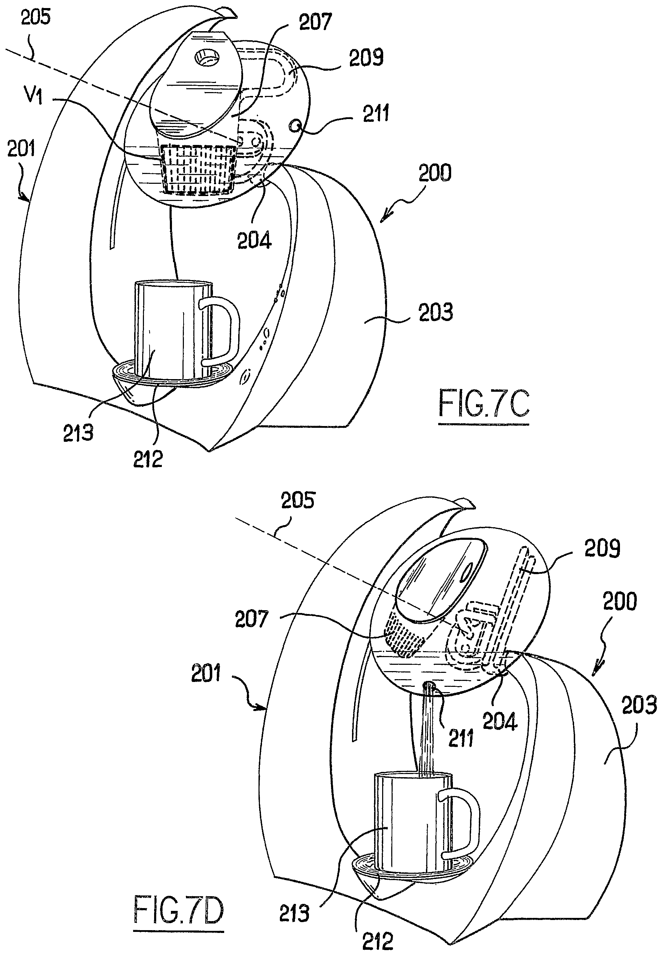

Cet infuseur 206 comprend deux volumes distincts, un premier volume V1 dit volume de retenue et d'infusion (figure 7D) et un second volume V2 dit volume de chauffage (Figure 7B). Ledit infuseur 206 comporte dans le premier volume V1 un panier filtre de retenue 207 amovible dans lequel sont placées les feuilles de thé à infuser. Ce panier filtre de retenue 207 est avantageusement obtenu dans un matériau poreux et de préférence dans de la terre cuite. Ledit panier filtre de retenue 207 est apte à être introduit dans l'infuseur 206 par un orifice 208 pratiqué dans la paroi de ce dernier.

Il est bien évident que le panier filtre de retenue 207 pourra être substitué par tous autres moyens de retenue équivalent tels que des cartouches, sous forme de dosettes contenant du thé sans pour autant sortir du cadre de l'invention.

On observera que l'axe 205 est exclu du volume V2 et V1, c'est-à-dire qu'il ne traverse ni le volume V2 recevant l'eau ni le volume V1, afin d'éviter tout problème d'étanchéité.

Par ailleurs, ledit infuseur 206 comporte dans le second volume V2 des moyens de chauffage et /ou de refroidissement de l'eau 209 tels qu'une résistance électrique par exemple ainsi qu'un capteur de température 210.

Afin de permettre l'évacuation de l'infusion, l'infuseur 206 comporte un trou d'évacuation 211 débouchant entre les volumes V1 et V2. Cette position avantageuse du trou d'évacuation 211 permet également d'éviter tout problème d'étanchéité.

Il est bien évident que le trou d'évacuation 211 pourra être substitué par tous moyens d'évacuation bien connus de l'homme de l'art tels qu'un trou muni de moyens d'obturation pilotés et étanches, lesdits moyens pouvant débouché dans le volume V1 ou V2.

De plus, le dispositif comporte entre les deux branches 201 et 203 de l'embase 200, un socle 212 apte à recevoir une tasse 213 dans laquelle le thé sera versé après infusion. Accessoirement, ledit socle 212 pourra avantageusement comporter des moyens de chauffage et/ou de refroidissement, non représentés sur la figure 3 afin de maintenir à température le thé infusé à environ 50°C, qui est la température conseillée pour boire les infusions de manière à éviter toute brûlure de la gorge.

Par ailleurs, ledit dispositif comporte une unité de pilotage 214 connecté au capteur de température 210, aux moyens de chauffage de l'eau 209, au moteur 204 et à une pompe 215 entraînant l'eau contenue dans le réservoir 202 jusqu'à l'infuseur 206 notamment. Cet unité de pilotage 214 comprend d'une part une unité de mémoire 216 dans laquelle sont enregistrées des informations relatives aux feuilles de thé placées dans le panier filtre de retenue 207 et d'autre part un système microprogrammé tel qu'un microprocesseur, ou un micro-contrôleur, connecté à l'unité de mémoire 216, et dans lequel sont enregistrés des algorithmes constituant des moyens de détermination de la température à laquelle le volume d'eau doit être chauffé et des moyens de détermination du temps d'infusion du produit dans ledit volume d'eau chauffé.

La branche 201 recevant le réservoir d'eau 202 est avantageusement amovible et comporte dans sa base la pompe 215 connectée à une conduite d'évacuation 217 débouchant à l'extrémité libre du réservoir 202, c'est-à-dire débouchant au droit de l'infuseur 206 lorsque le réservoir d'eau 202 est en place. De plus, le réservoir 202 comporte un capteur capacitif 218 relié à des moyens de connexion par contact 219 placés au fond d'un évidement conique 220 pratiqué à la base de la branche 201 et apte à recevoir un ergot conique 221 muni à son extrémité de moyens de connexion par contact 222 reliés à l'unité de pilotage 214. La pompe 215 est également reliée aux moyens de connexion par contact 219 du réservoir 202. Ainsi, lorsque l'unité de pilotage 214 actionne la pompe 215 pour verser de l'eau dans l'infuseur 206, à travers une ouverture, non représentée sur les figures, pratiquée dans la paroi de l'infuseur 206, le capteur capacitif 218 transmet une indication du volume présent au début du pompage. Lorsque le capteur capacitif 218 indique à l'unité de pilotage 214 qu'un volume déterminé d'eau a été versé dans l'infuseur 206, ladite unité de pilotage 214 arrête la pompe 215.

Par ailleurs, lorsque le capteur capacitif 218 indique qu'il n'y a plus d'eau, ou plus assez d'eau, dans le réservoir 202 pour effectuer le nombre de tasses demandé par l'utilisateur, l'unité de pilotage 214 d'une part empêche toute nouvelle infusion tant que le réservoir 202 n'est pas rempli et d'autre part émet un signal visuel ou sonore indiquant le manque ou l'absence d'eau à l'utilisateur afin qu'il puisse remplir le réservoir 202.

Accessoirement, la branche 201 peut comprendre des moyens de filtrage de l'eau, non représentés sur les figures tels que des filtres à carbone ou similaire constitués d'une cartouche amovible ou tout autre moyen de filtrage bien connu de l'homme du métier. Lesdits moyens de filtrage pourront, par exemple, être montés sur la conduite d'évacuation 217 à proximité de l'extemité libre de la branche 201.

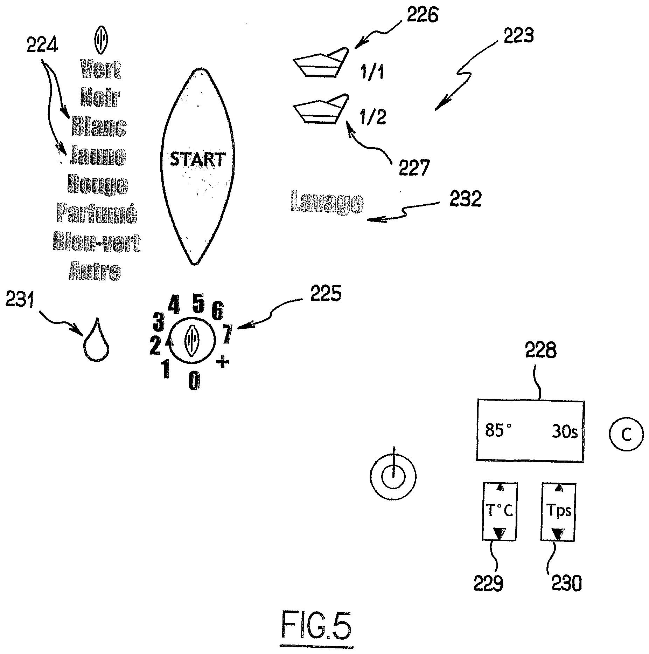

En référence à la figure 5, le dispositif comporte avantageusement une interface 223 comprenant des boutons 224 pour sélectionner la nature des feuilles de thé introduites dans le panier filtre de retenue 207, un écran d'information 225 sur le nombre d'infusion déjà réalisés et celle en cours (1 infusion correspondant à un cycle de 150 ml) et des boutons 226,227 pour sélectionner la quantité de thé à réaliser : une tasse par défaut (150 ml), une demi théière (bouton 227) correspondant à 2 tasses ou une théière (bouton 226) correspondant à 4 tasses. L'interface 223 comporte également un écran d'affichage 228 et des boutons 229,230 pour sélectionner des informations relatives à la température et à la durée de l'infusion. De cette manière, l'utilisateur pourra éventuellement modifier la température et/ou les temps d'infusion par défaut en fonction de ses préférences et/ou du produit infusé.

L'étape de lavage précédant la première infusion pourra ainsi par exemple être supprimée en sélectionnant avec le bouton 230 un temps d'infusion nul.

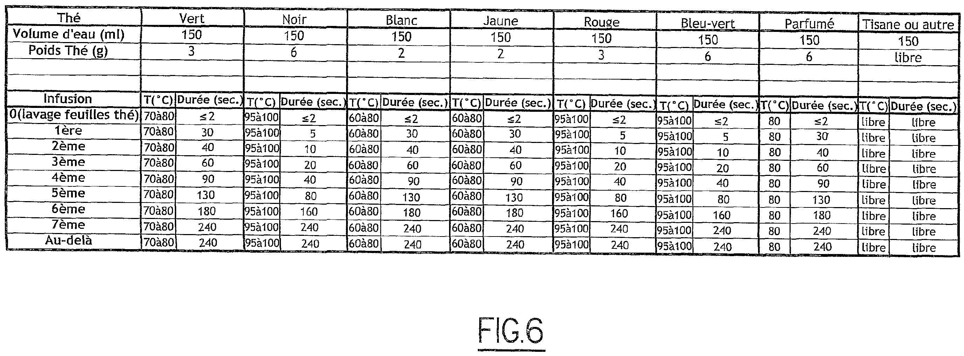

Cette étape de lavage des feuilles de thé est effectuée avant la première infusion, c'est-à-dire lorsque de nouvelles feuilles de thé ont été placées dans le panier filtre de retenue 207, et consiste à mélanger les feuilles à infuser avec un volume d'eau déterminé, correspondant à une tasse, c'est-à-dire environ 150 ml, porté à une température supérieure à 60°C pendant un temps inférieur ou égal à 5 secondes. De préférence, cette étape de lavage consiste à mélanger les feuilles à infuser avec un volume d'eau d'environ 150 ml porté à une température comprise entre 60° et 100°C pendant un temps inférieur ou égal à 2 secondes. Tous les éléments de température et de durée de cette étape de lavage sont indiqués dans le tableau représenté sur la figure 6. L'eau de cette étape de lavage est récupérée dans la tasse 213 que l'utilisateur vide avant le début de la première infusion.

Enfin, l'interface 223 comporte un voyant 231 indiquant que le réservoir d'eau 202 manque d'eau pour réaliser la quantité de thé demandée et un bouton 232 permettant d'effectuer un lavage de l'infuseur 206.

On expliquera maintenant le fonctionnement du dispositif suivant l'invention en référence aux figures 3 et 7A à 7D.

En référence aux figures 3 et 7A, de l'eau est préalablement introduit dans le réservoir d'eau 202 et des feuilles de thé sont placées dans le panier filtre de retenue 207 qui est ensuite placé dans le volume V1 de l'infuseur 206. Puis, l'utilisateur sélectionne sur l'interface 218, la nature des feuilles introduite (thé vert, noir, blanc, etc...), le nombre de tasses (1 tasse par défaut, ½ theière = 2 tasses et 1 théière = 4 tasses). L'unité de pilotage 214 détermine alors la température et le temps d'infusion. L'ensemble des valeurs de température et de temps d'infusion est indiqué dans le tableau de la figure 6.

Toutefois, l'utilisateur, pourra sélectionner lui-même la température et la durée d'infusion en fonction des goûts personnels et appuyant sur les boutons 229,230.

En référence à la figure 7B, l'infuseur 206 est entraîné en rotation autour de son axe 205 puis l'eau est introduite dans ledit infuseur 206, plus précisément l'eau est introduite dans le volume V2 de l'infuseur 206, sans traverser le volume V1 dudit infuseur 206. L'eau n'est alors pas en contact avec les feuilles de thé placées dans le panier filtre de retenue 207 qui se situe alors dans la partie supérieure de l'infuseur 206. L'eau est ensuite chauffée jusqu'à ce qu'elle atteigne la température déterminée par l'unité de pilotage 214.

Lorsque l'eau est arrivée à température, en référence à la figure 7C, l'infuseur est entraîné en rotation autour de son axe 105, suivant une rotation de +180° (pour ne pas faire passer l'eau par le trou d'évacuation 211), c'est-à dire suivant une rotation de 180° dans le sens des aiguilles d'une montre, de telle manière que le panier filtre de retenue 207 et les feuilles de thé plongent dans l'eau chaude. La rotation de l'infuseur 206 est limitée par tout moyen approprié tel que des capteurs de position par exemple. On notera que la rotation de l'infuseur 206 et la plongée du panier filtre de retenue 207 dans l'eau procure une agitation favorisant un mélange homogène des feuilles de thé dans l'eau. De plus, l'infuseur 206 peut subir des rotations de faibles amplitudes, procurant de préférence un mouvement pendulaire à l'infuseur 206, pendant la durée de l'infusion, favorisant ainsi la réalisation d'un mélange parfaitement homogène.

Lorsque la durée de l'infusion est terminée, en référence à la figure 7D, l'infuseur 206 est une nouvelle fois entraîné en rotation autour de son axe 205, suivant une rotation de +90°, pour évacuer l'infusion par le trou d'évacuation 211 qui se situe alors au point le plus bas de l'infuseur 206 et au droit de la tasse 213 placée sur le socle 210.

L'étape de lavage des feuilles s'effectue normalement à chaque nouvelle introduction de feuilles de thé et consiste de manière similaire, en référence aux figures 7B à 7D, à la préparation d'une infusion, le temps d'infusion étant inférieur ou égal à 2 secondes.

Par ailleurs, on notera que l'infuseur 206 pourra être nettoyé en introduisant un volume d'eau supérieur au volume d'eau prédéterminé correspondant à une tasse puis en chauffant l'eau à une température d'environ 100°C, la panier filtre de retenue 207 étant de préférence préalablement vidé.

Il va de soi que le réservoir d'eau 202 peut être substitué par une alimentation en eau continue par le réseau d'eau courante par exemple, le capteur capacitif 218 étant alors substitué par un débitmètre.

Par ailleurs, le dispositif peut avantageusement comprendre un tiroir d'introduction des feuilles de thé, préalablement conditionnées dans un sachet, une capsule ou similaire ou non.

De plus, les moyens de chauffage 209 pourront être placé dans la branche 201, dans le réservoir 202 où à la sortie de ce dernier, sans sortir du cadre de l'invention.

On notera que l'infuseur 206 pourra présenter une forme quelconque et que les volumes V1 et V2 pourront être séparés par une paroi. En fonction de la forme de l'infuseur 206, les angles de rotation pourront être différents et les rotations de l'infuseur 206 pourront éventuellement être substituées par des translations ou tout autre mouvement permettant le passage de l'eau du volume V1 vers le volume V2 et inversement sans pour autant sortir du cadre de l'invention.

Le dispositif peut comprendre des moyens de lecture d'un code d'identification de la quantité et/ou de la nature des feuilles de thé placées dans le bac d'infusion, lesdits moyens de lecture étant connectés à l'unité de pilotage 18. Le code d'identification peut consister en tout code d'identification bien connu de l'Homme du Métier tel qu'un code barres, une puce électronique, un code magnétique ou optique, une impression en relief ou en creux par exemple, les moyens de lecture consistant en un lecteur optique, magnétique, électronique, mécanique ou similaire.

Enfin, il est bien évident que le dispositif pourra être adapté pour l'obtention de toute boisson chaude ou froide, obtenue par infusion d'un produit dans de l'eau, tel qu'une tisane par exemple, et que les exemples que l'on vient de donner ne sont que des illustrations particulière en aucun cas limitatives quant aux domaines d'application de l'invention.

## Revendications

1. Dispositif pour la préparation d'une boisson chaude ou froide, par infusion d'un produit dans de l'eau, comportant une alimentation en eau, des moyens de chauffage (209) pour chauffer l'eau et une unité de pilotage (214) coopérant avec des moyens de détermination de la température à laquelle ledit volume d'eau doit être chauffé et des moyens de détermination du temps d'infusion du produit dans ledit volume d'eau chauffé, et comprenant en outre au moins un infuseur (206) apte à recevoir un volume d'eau déterminé, ledit infuseur (206) comprenant au moins des moyens de retenues du produit à infuser (207) et des moyens d'évacuation (211) de l'infusion, **caractérisé en ce que** ledit infuseur (206) est entraîné en mouvement et comporte deux volumes distincts, un premier volume V1 dit volume de retenue et d'infusion dans lequel s'étendent les moyens de retenue (207) et un second volume V2 dit volume de chauffage, le mouvement de l'infuseur (206) permettant de transférer le volume déterminé de l'eau au moins du volume V2 vers le volume V1 puis vers les moyens d'évacuation (211).

2. Dispositif suivant la revendication 1, **caractérisé en ce que** les moyens d'évacuation (211) débouchent entre les volumes V1 et V2.

3. Dispositif suivant la revendication 2, **caractérisé en ce que** les moyens d'évacuation (211) consistent en un trou (211) pratiqué dans la paroi de l'infuseur (206) et débouchant entre les volumes V1 et V2.

4. Dispositif selon l'une quelconque des revendications 1 à 3, **caractérisé en ce que** les moyens de retenue (207) consistent en un panier filtre apte à être introduit dans le volume V1 par un orifice (208) pratiqué dans la paroi de l'infuseur (206).

5. Dispositif selon l'une quelconque des revendications 1 à 4, **caractérisé en ce que** l'infuseur (206) est monté en rotation autour d'un axe (205).

6. Dispositif suivant la revendication 5, **caractérisé en ce que** l'axe (205) forme un angle α avec l'horizontale.

7. Dispositif suivant la revendication 6, **caractérisé en ce que** l'angle α est compris entre 20 et 45°.

8. Dispositif suivant l'une quelconque des revendications 5 à 7, **caractérisé en ce qu'**il comporte un moteur (204) pour entraîner en rotation l'infuseur (206) autour de l'axe (205).

9. Dispositif suivant l'une quelconque des revendications 1 à 7, **caractérisé en ce qu'**il comporte des moyens de chauffage (209) de l'eau s'étendant dans le volume V2 de l'infuseur (206).

10. Dispositif suivant la revendication 8, **caractérisé en ce qu'**il est constitué d'une embase (200) en forme générale de croissant de lune comprenant une première branche (201) et une seconde branche (203) comportant à son extrémité libre le moteur (204) apte à entraîner en rotation l'infuseur (206) autour de l'axe (205).

11. Dispositif suivant l'une quelconque des revendications 4 à 10, **caractérisé en ce que** le panier filtre de retenue (207) est obtenu dans un matériau poreux.

12. Dispositif selon la revendication 11, **caractérisé en ce que** le panier filtre de retenue (207) est obtenu dans de la terre cuite.

13. Dispositif suivant l'une quelconque des revendications 1 à 12, **caractérisé en ce que** l'infuseur (206) présente une forme globalement sphérique.

14. Dispositif suivant la revendication 10, **caractérisé en ce que** la première branche (201) est amovible et comporte dans sa base une pompe (215) connectée à une conduite d'évacuation (217) débouchant à l'extrémité libre du réservoir (202), et un capteur capacitif (218), ladite pompe (215) et le capteur capacitif (218) étant reliés à l'unité de pilotage.

## Patentansprüche

1. Vorrichtung für die Zubereitung eines warmen oder kalten Getränks durch Aufgießen eines Produkts in Wasser, aufweisend eine Wasserversorgung, Heizmittel (209) zum Heizen des Wassers und eine Steuereinheit (214), die mit Bestimmungsmitteln der Temperatur zusammenwirkt, auf welche das Wasservolumen erhitzt werden muss, und Mitteln zur Bestimmung der Aufgusszeit des Produkts in dem erhitzten Wasservolumen, und die ferner mindestens eine Aufgussvorrichtung (206) umfasst, die imstande ist, ein bestimmtes Wasservolumen aufzunehmen, wobei die Aufgussvorrichtung (206) mindestens Rückhaltemittel des aufzugießenden Produkts (207) und Ableitungsmittel (211) des Aufgusses umfasst, **dadurch gekennzeichnet, dass** die Aufgussvorrichtung (206) bewegt wird und zwei unterschiedliche Volumen aufweist, ein erstes Volumen V1, bezeichnet als Aufguss- und Rückhaltevolumen, in welchem sich Rückhaltemittel (207) erstrecken, und ein zweites Volumen V2, bezeichnet als Heizvolumen, wobei die Bewegung der Aufgussvorrichtung (206) erlaubt, das bestimmte Wasservolumen mindestens vom Volumen V2 zum Volumen V1 und danach zu den Ableitungsmitteln (211) zu befördern.

2. Vorrichtung nach Anspruch 1, **dadurch gekennzeichnet, dass** die Ableitungsmittel (211) zwischen den Volumen V1 und V2 ausmünden.

3. Vorrichtung nach Anspruch 2, **dadurch gekennzeichnet, dass** die Ableitungsmittel (211) aus einem Loch (211) bestehen, das in der Wand der Aufgussvorrichtung (206) ausgebildet ist und zwischen den Volumen V1 und V2 ausmündet.

4. Vorrichtung nach einem der Ansprüche 1 bis 3, **dadurch gekennzeichnet, dass** die Rückhaltemittel (207) aus einem Filterkorb bestehen, der imstande ist, durch eine in der Wand der Aufgussvorrichtung (206) ausgebildete Öffnung (208) in das Volumen V1 eingesetzt zu sein.

5. Vorrichtung nach einem der Ansprüche 1 bis 4, **dadurch gekennzeichnet, dass** die Aufgussvorrichtung (206) rotierend um eine Achse (205) montiert ist.

6. Vorrichtung nach Anspruch 5, **dadurch gekennzeichnet, dass** die Achse (205) mit der Horizontalen einen Winkel α bildet.

7. Vorrichtung nach Anspruch 6, **dadurch gekennzeichnet, dass** der Winkel α zwischen 20 und 45° inklusive beträgt.

8. Vorrichtung nach einem der Ansprüche 5 bis 7, **dadurch gekennzeichnet, dass** sie einen Motor (204) aufweist, um die Aufgussvorrichtung (206) rotierend um die Achse (205) anzutreiben.

9. Vorrichtung nach einem der Ansprüche 1 bis 7, **dadurch gekennzeichnet, dass** sie Heizmittel (209) des Wassers aufweist, die sich im Volumen V2 der Aufgussvorrichtung (206) erstrecken.

10. Vorrichtung nach Anspruch 8, **dadurch gekennzeichnet, dass** sie von einer Grundplatte (200) in allgemeiner Halbmondform gebildet ist, umfassend einen ersten Schenkel (201) und einen zweiten Schenkel (203), aufweisend an seinem freien Ende einen Motor (204), der imstande ist, die Aufgussvorrichtung (206) rotieren um die Achse (205) anzutreiben.

11. Vorrichtung nach einem der Ansprüche 4 bis 10, **dadurch gekennzeichnet, dass** der Filterhaltekorb (207) aus einem porösen Material hergestellt ist.

12. Vorrichtung nach Anspruch 11, **dadurch gekennzeichnet, dass** der Filterhaltekorb (207) aus Terracotta hergestellt ist.

13. Vorrichtung nach einem der Ansprüche 1 bis 12, **dadurch gekennzeichnet, dass** die Aufgussvorrichtung (206) eine allgemein runde Form aufweist.

14. Vorrichtung nach Anspruch 10, **dadurch gekennzeichnet, dass** der erste Schenkel (201) lösbar ist und an seiner Basis eine Pumpe (215) aufweist, die mit einer Ableitungsleitung (217) verbunden ist, die am freien Ende des Vorratsbehälters (202) ausmündet, und einen kapazitiven Sensor (218), wobei die Pumpe (215) und der kapazitive Sensor (218) mit der Steuereinheit (214) verbunden sind.

**Claims**

1. A device for preparing a hot or cold beverage, by infusing a product in water, including a water supply, heating means (209) to heat the water and a control unit (214) cooperating with means for determining the temperature to which said volume of water must be heated and means for determining the infusion time of the product in said heated volume of water, and further comprising at least one infuser (206) able to receive a determined volume of water, said infuser (206) comprising at least means for holding the product to be infused (207) and means (211) for discharging the infusion, **characterized in that** said infuser (206) is moved and includes two separate volumes, a first so-called holding and infusion volume V1 in which the holding means (207) extend, and a second so-called heating volume V2, the movement of the infuser (206) making it possible to transfer the determined volume of water at least from the volume V2 to the volume V1, then toward the discharge means (211).

2. The device according to claim 1, **characterized in that** the discharge means (211) emerge between the volumes V1 and V2.

**3.** The device according to claim 2, **characterized in that** the discharge means (211) consist of a hole (211) formed in the wall of the infuser (206) and emerging between the volumes V1 and V2.

**4.** The device according to any one of claims 1 to 3, **characterized in that** the holding means (207) consist of a filter basket able to be inserted into the volume V1 through an orifice (208) formed in the wall of the infuser (206).

**5.** The device according to any one of claims 1 to 4, **characterized in that** the infuser (206) is mounted rotating around an axis (205).

**6.** The device according to claim 5, **characterized in that** the axis (205) forms an angle α with the horizontal.

**7.** The device according to claim 6, **characterized in that** the angle α is comprised between 20 and 45°.

**8.** The device according to any one of claims 5 to 7, **characterized in that** it includes a motor (204) to rotate the infuser (206) around the axis (205).

**9.** The device according to any one of claims 1 to 7, **characterized in that** it includes heating means (209) for heating the water extending in the volume V2 of the infuser (206).

**10.** The device according to claim 8, **characterized in that** it is made up of a generally crescent moon-shaped base (200) comprising a first branch (201) and a second branch (203) including, at its free end, the motor (204) able to rotate the infuser (206) around the axis (205).

**11.** The device according to any one of claims 4 to 10, **characterized in that** the first holding filter (207) is obtained from a porous material.

**12.** The device according to claim 11, **characterized in that** the holding filter basket (207) is obtained from terra cotta.

**13.** The device according to any one of claims 1 to 12, **characterized in that** the infuser (206) has a globally spherical shape.

**14.** The device according to claim 10, **characterized in that** the first branch (201) is removable and includes, in its base, a pump (215) connected to a discharge pipe (217) emerging at the free end of the reservoir (202), and a capacitive sensor (218), said pump (215) and the capacitive sensor (218) being connected to the control unit.

# FIG.1

FIG.2

FIG.4

FIG.3

FIG.5

| Thé | Vert | | Noir | | Blanc | | Jaune | | Rouge | | Bleu-vert | | Parfumé | | Tisane ou autre | |
|---|---|---|---|---|---|---|---|---|---|---|---|---|---|---|---|---|
| Volume d'eau (ml) | 150 | | 150 | | 150 | | 150 | | 150 | | 150 | | 150 | | 150 | |
| Poids Thé (g) | 3 | | 6 | | 2 | | 2 | | 3 | | 6 | | 6 | | libre | |
| | | | | | | | | | | | | | | | | |
| Infusion | T(°C) | Durée (sec.) | T(°C) | Durée (sec.) | T(°C) | Durée (sec.) | T(°C) | Durée (sec.) | T(°C) | Durée (sec.) | T(°C) | Durée (sec.) | T(°C) | Durée (sec.) | T(°C) | Durée (sec.) |
| 0(lavage feuilles thé) | 70à80 | ≤2 | 95à100 | ≤2 | 60à80 | ≤2 | 60à80 | ≤2 | 95à100 | ≤2 | 95à100 | ≤2 | 80 | ≤2 | libre | libre |
| 1ère | 70à80 | 30 | 95à100 | 5 | 60à80 | 30 | 60à80 | 30 | 95à100 | 5 | 95à100 | 5 | 80 | 30 | libre | libre |
| 2ème | 70à80 | 40 | 95à100 | 10 | 60à80 | 40 | 60à80 | 40 | 95à100 | 10 | 95à100 | 10 | 80 | 40 | libre | libre |
| 3ème | 70à80 | 60 | 95à100 | 20 | 60à80 | 60 | 60à80 | 60 | 95à100 | 20 | 95à100 | 20 | 80 | 60 | libre | libre |
| 4ème | 70à80 | 90 | 95à100 | 40 | 60à80 | 90 | 60à80 | 90 | 95à100 | 40 | 95à100 | 40 | 80 | 90 | libre | libre |
| 5ème | 70à80 | 130 | 95à100 | 80 | 60à80 | 130 | 60à80 | 130 | 95à100 | 80 | 95à100 | 80 | 80 | 130 | libre | libre |
| 6ème | 70à80 | 180 | 95à100 | 160 | 60à80 | 180 | 60à80 | 180 | 95à100 | 160 | 95à100 | 160 | 80 | 180 | libre | libre |
| 7ème | 70à80 | 240 | 95à100 | 240 | 60à80 | 240 | 60à80 | 240 | 95à100 | 240 | 95à100 | 240 | 80 | 240 | libre | libre |
| Au-delà | 70à80 | 240 | 95à100 | 240 | 60à80 | 240 | 60à80 | 240 | 95à100 | 240 | 95à100 | 240 | 80 | 240 | libre | libre |

FIG.6

FIG.7A

FIG.7B

205
207
209
211
200
V1
201
204
203
213
212

FIG.7C

205
209
200
207
203
201
204
211
213
212

FIG.7D

**EP 2 051 611 B1**

## RÉFÉRENCES CITÉES DANS LA DESCRIPTION

**Documents brevets cités dans la description**

- GB 870763 A
- US 2517073 A
- US 2971454 A
- US 2996975 A
- US 3941042 A
- US 6915733 B